# EUROPEAN PATENT APPLICATION

(11) **EP 4 763 572 A1**
(43) Date of publication of application: **24.06.2026**
(21) Application number: 24222366.7
(22) Date of filing: 20.12.2024
(51) Int. Cl.: B60K 35/10, B60K 35/25, G05G 1/08, G06F 3/01, G06F 3/0362, G05G 5/02

(54) **USER INPUT DEVICE FOR AN INTERIOR OF A VEHICLE, AND VEHICLE**

(71) Applicant: Volvo Car Corporation, 405 31 Göteborg (SE)
(72) Inventor: AICKEN, Richard, 40531 Göteborg (SE); ANTONSSON, Bo, 40531 Göteborg (SE)
(74) Representative: Kransell & Wennborg KB

(57) **Abstract**

The disclosure relates to a user input device (14) for an interior of a vehicle. The user input device (14) comprises a movable part (36), a first guiding means (62), a second guiding means (80), and a haptic feedback unit (102). The first guiding means (62) confines a radial displaceability of the movable part (36) to a linear movement along a first radial displacement direction (48) and to a linear movement along a second radial displacement direction (50). The second guiding means (80) confines an axial displacement of the movable part (36) along an axial displacement axis (60) and allows a rotation of the movable part (36) around the axial displacement axis (60). The haptic feedback unit (102) creates a haptic feedback for a user (22) in response to the rotation of the movable part (36). A type of the haptic feedback depends on a direction of the radial displacement. Moreover, the disclosure is directed to a vehicle comprising the user input device (14).

## Description

### TECHNICAL FIELD

The present disclosure relates to a user input device for an interior of a vehicle.

The present disclosure is also directed to a vehicle comprising such a user input device.

### BACKGROUND ART

Modem vehicles offer a variety of functionalities, e.g. in the fields of occupant comfort, entertainment, communication, and/or navigation. Moreover, modern vehicles can be adapted to a user's preferences by adjusting a number of vehicle settings. These functionalities and vehicle settings may be adjusted using associated controls or user input devices such as push buttons, rotary knobs, rotary-push knobs, sliders, touch screens etc. Thus, when designing a vehicle, an appropriate control or user input devices needs to be provided for each functionality. However, due to the high number of functionalities it is usually not appropriate to provide one control per functionality. This applies both from a perspective of usability and from a perspective of keeping the vehicle structurally simple. Thus, very often controls are provided which allow adjustment of more than one functionality, whereby it must be taken into account that a simple adjustability of all associated functionalities is possible.

### SUMMARY

An objective of the present disclosure is to further enhance the usability of user input devices located in an interior of a vehicle.

The problem is at least partially solved or alleviated by the subject matter of the independent claims of the present disclosure, wherein further examples are incorporated in the dependent claims.

According to a first aspect, there is provided a user input device for an interior of a vehicle. The user input device comprises:
- a movable part movable by a user,
- a first guiding means coupled to the movable part and confining a radial displaceability of the movable part to a linear movement along a first radial displacement direction and to a linear movement along a second radial displacement direction,
- a second guiding means coupled to the movable part and confining an axial displaceability of the movable part along an axial displacement axis and allowing a rotation of the movable part around the axial displacement axis, wherein the axial displacement axis is perpendicular to both of the first radial displacement direction and the second radial displacement direction, and
- a haptic feedback unit for creating a haptic feedback for the user in response to the rotation of the movable part, wherein a type of the haptic feedback depends on a direction of the radial displacement.

In the context of the present disclosure, the interior of the vehicle may be understood as an inside of a passenger cabin of the vehicle, i.e. an inside of a space that is designed for one or more occupants of the vehicle. The fact that the user input device comprises a movable part implies that the user can move or manipulate the user input device via this movable part for making a user input to the vehicle via the user input device. Thus, the user input device may also be referred to as a dial. More precisely, the movable part is configured to be manually moved, i.e. the user may move the user input device with his or her hands. In this context, the movable part may be raised with respect to a frame element or console element on which the user input device is arranged. The user input device may comprise a dedicated manipulation interface, which may comprise at least two manipulation surfaces for the user to move or manipulate the movable part. In an example in which the movable part is shaped as a circular cylinder, the at least two manipulation surfaces may comprise a lateral cylinder surface, onto which the user may exercise a pushing force as well as a torque, and a cylinder top surface, onto which the user may exercise a pushing force. In the example in which the movable part is shaped as a circular cylinder, the axial displacement axis may coincide with a central axis of the circular cylinder.

The user input device of the first aspect comprises a first guiding means that confines a radial displaceability of the movable part to a linear movement along the first radial displacement direction and to the linear movement along the second radial displacement direction. This means that the first guiding means is configured to confine a radial displacement of the movable part to a linear movement along the first radial displacement direction and to the linear movement along the second radial displacement direction. Confining is to be understood in the sense of restricting the radial displaceability of the movable part to a linear movement along the first radial displacement direction and to the linear movement along the second radial displacement direction. Thus, radial movements along other directions are not possible. The first radial displacement direction and the second radial displacement direction may be perpendicular to each other. In an example in which the movable part is shaped as a circular cylinder, the radial displacement of the movable part may be caused by a pushing force that is exercised onto the lateral cylinder surface of the movable part.

The user input device of the first aspect comprises a second guiding means that confines the axial displaceability of the movable part to a movement along the axial displacement axis. This means that the second guiding means is configured to confine an axial displacement of the movable part to a movement along the axial displacement axis. Again, confining is to be understood in the sense of restricting the axial displaceability of the movable part to a movement along the axial displacement axis. Thus, other axial movements are not possible. In an example in which the movable part is shaped as a circular cylinder, the axial displacement of the movable part may be caused by the pushing force that is exercised onto the cylinder top surface of the movable part.

It is noted that neither the first guiding means nor the second guiding means impede the rotation of the movable part around the axial displacement axis. Thus, when a torque is applied to the movable part with respect to the axial displacement axis or with respect to an axis parallel thereto, in an example via a lateral cylinder surface, the movable part rotates around the axial displacement axis or around an axis parallel thereto.

In the user input device according to the present disclosure, the radial displacement or displaceability and the axial displacement or displaceability of the movable part is determined with respect to a resting position. The resting position may also be described as a neutral position of the movable part. This position is reached in an absence of any manipulating forces or torques being exercised onto the movable part. It is understood that the movable part may rotate around the axial displacement axis when in the resting position and/or around an axis parallel to the axial displacement axis in any radially displaced position.

Altogether, the user input device according to the first aspect may be moved in that it is moved radially, in that it is moved axially and/or in that it is rotated. Each of these manipulations may be regarded as a specific user input which may be associated with a certain functionality or adjustment of a certain setting. The mentioned manipulations may also be combined, i.e. the movable part may be first moved radially and then rotated. This has the effect that the user input device may act as a rotational dial in at least five different positions, i.e. in the resting position, in two positions at opposite extremes of the first radial displacement direction and in two positions at opposite extremes of the second radial displacement direction. Thus, at least five different functions of the vehicle may be adjusted making use of the user input device as a rotational dial. In another example a combination of the above-mentioned manipulations comprises a combination of radially and axially moving the movable part.

In the user input device according to the present disclosure, the haptic feedback unit is configured to create a haptic feedback for the user in response to the torque that the user has applied to the movable part in order to rotate the movable part around the axial displacement axis. A type of the haptic feedback depends on a direction of the radial displacement. This means that the haptic feedback is different depending on the radial movement the movable part of the user input device has performed before. The haptic feedback for the user may comprise an increasing or decreasing torque that the user has to overcome in order to rotate the movable part around the axial displacement axis or around an axis parallel thereto. Additionally or alternatively, the haptic feedback for the user may comprise a sinusoidal-type or a sawtooth-type torque that the user has to overcome in order to rotate the movable part around the axial displacement axis or around an axis parallel thereto. A torque that needs to be overcome may be designated as a counter torque or feedback torque. Additionally or alternatively, the type of the haptic feedback may be different in the resting position than in one or all radially displaced position. Altogether, at least five different types of haptic feedback may be provided to the user upon rotation of the movable part. The type of the haptic feedback may indicate to the user which function of the vehicle the user is currently adjusting and/or has been adjusting. Thus, usability of the user input device is enhanced.

The general idea underlying the present disclosure is, thus, to detect that a certain radial movement or manipulation of the user input device is performed. A haptic feedback type is selected on the basis of this. Consequently, a plurality of haptic feedback types may be available for controlling the user input device, which may be selected specifically based on the radial movement or manipulation. In other words, a suitable haptic feedback type can be individually selected for the detected radial movements or manipulations. This makes it easier for the user to move or operate the user input device and adjust an associated function or system. In other words, usability is enhanced.

In the context of the present disclosure, haptic feedback types define the kind of haptic feedback that is to be provided to the user via the user input device. Haptic feedback is understood as a feedback that can be haptically perceived by the user. Haptic feedback may comprise a movement of the user input device or a portion thereof. Additionally or alternatively, haptic feedback may comprise a resistance provided against a movement or manipulation of the user input device by the user. The resistance may be constant or variable.

In an example, the movable part may only be axially displaceable in the resting position. This has the effect that any radial displacement of the movable part may be separated from its axial displacement. This enhances an ease of use of the user input device for the user since the user does not need to think about complex movement patterns for adjusting a particular function of the vehicle.

In an example, a particular function of the vehicle may be activated or deactivated making use of the user input device as a pushbutton. Additionally or alternatively, pushing the movable part down along the axial displacement axis may serve as a confirmation of a selection of a particular function that the user has previously made. The particular function of the vehicle that may be confirmed, activated or deactivated may be the same or different functions than the at least five different functions of the vehicle that may be adjusted making use of the user input device as a rotational dial as mentioned above.

In an example, the haptic feedback unit comprises an electric motor that is communicatively connected to at least one sensing element configured for sensing the radial displacement along the first radial displacement direction and/or along the second radial displacement direction. The electric motor is coupled to the movable part either directly or via a transmission unit. In an example, the electric motor is a stepper motor or a servo motor. The at least one sensing element may comprise a mechanical switch, a hall sensor, an inductive proximity sensor or a capacitive proximity sensor, a light sensor or a potentiometer. In an example, there is at least one sensing element for sensing the radial displacement along the first radial displacement direction and at least one sensing element for sensing the radial displacement along the second radial displacement direction. In a further example, there may be at least one sensing element for sensing that the movable part has been moved into a first orientation along the first radial displacement direction and another at least one sensing element for sensing that the movable part has been moved into a second orientation along the first radial displacement direction. The first orientation and the second orientation along the first radial displacement direction may be opposite to each other. Moreover, there may be at least one sensing element for sensing that the movable part has been moved into a third orientation along the second radial displacement direction and another at least one sensing element for sensing that the movable part has been moved into a fourth orientation along the second radial displacement direction. The third orientation and the fourth orientation along the second radial displacement direction may be opposite to each other. Using the electric motor a torque acting against a movement or manipulation of the user input device may be provided, in particular this torque acts against a rotation of the user input device. Thus, using such an electric motor, one or more of a variable resistance one or more resistance peaks and limitations may be provided. Thus, the electric motor may provide different types of the haptic feedback depending on a direction of the radial displacement.

The electric motor may comprise a data processing apparatus that receives sensor data from the at least one sensing element. Alternatively, the electric motor may be coupled to the data processing apparatus that receives sensor data from the at least one sensing element. Depending on which sensing element sends sensor data indicative of a radial displacement of the movable part to the data processing apparatus, the data processing apparatus may cause the electric motor of the haptic feedback unit to provide a different type of torque profile that the user needs to overcome by rotating the movable part. The haptic feedback unit comprising an electric motor essentially has the effect that a haptic feedback upon rotation of the movable part around the axial displacement axis or around an axis parallel thereto may at least partially be defined by a computer program that is stored on a data storage unit of the data processing apparatus. The computer program may be executed by a data processing unit of the data processing apparatus. This makes the haptic feedback that can be provided to the user by the haptic feedback unit easily adaptable, versatile and flexible.

In an example, the movable part comprises a first tooth unit. The haptic feedback unit comprises a second tooth unit. The first tooth unit and the second tooth unit engage with each other in case of a radial displacement of the movable part along the first radial displacement direction or along the second radial displacement direction. The first tooth unit and the second tooth unit do not engage with each other in case of an absence of a radial displacement of the movable part. In this context, the term engage is to be understood as any kind of contacting interaction between the first tooth unit and the second tooth unit. In a first scenario, during an engagement between the first tooth unit and the second tooth unit, there may be no relative movement between the first tooth unit at the second tooth unit. This may mean that, in case of the radial displacement of the movable part and if the movable part is rotated around the axial displacement axis or around an axis parallel thereto, not only the first tooth unit of the movable part rotates around the axial displacement axis or around the axis parallel thereto but also the second tooth unit of the haptic feedback unit rotates around the axial displacement axis or around the axis parallel thereto at the same angular rotational speed as the first tooth unit. This is because the first tooth unit meshes with the second tooth unit without slippage between the first tooth unit at the second tooth unit. This has the effect that a haptic feedback resulting from a rotational movement of the second tooth unit relative to the frame element holding the user input device may be provided to the user while rotating the movable part around the axial displacement axis. In a second scenario, during an engagement of the first tooth unit with the second tooth unit, there may be a relative movement between the first tooth unit and the second tooth unit. In other words, the first tooth unit may mesh with the second tooth unit at a degree of slippage that is different from zero. In other words, the teeth of the first tooth unit and the teeth of the second tooth unit may be arranged and/or configured such that they can jump over one another. The degree of slippage may be 100%, meaning that, during the rotation, the first tooth unit moves relative to the second tooth unit, which is, in a direction of the rotation, stationary with respect to the first tooth unit. This may mean that, in case of the radial displacement of the movable part and if the movable part is rotated around the axial displacement axis or around an axis parallel thereto, only the first tooth unit of the movable part rotates around the axial displacement axis or around the axis parallel thereto. The second tooth unit of the haptic feedback unit may remain stationary, i.e. the second tooth unit does not rotate around the axial displacement axis or the axis parallel thereto. Moreover, the degree of slippage may be of any value between zero and 100%, whereby the exact values of zero and 100% are excluded. This may mean that during the rotation, the first tooth unit moves relative to the second tooth unit, which moves, in the direction of the rotation, at a lower angular rotational speed than the first tooth unit. However, due to the slipping or jumping of the teeth of the first tooth unit and the teeth of the second tooth unit relative to one another, a torque feedback is generated. This torque feedback may be adapted by adapting the form of the teeth and the relative positions thereof. In other words, any degree of slippage between the first tooth unit and the second tooth unit that is different from zero may cause a ratcheting movement of the first tooth unit relative to the second tooth unit. The ratcheting movement creates a haptic feedback that the user may sense while rotating the movable part around the axial displacement axis or an axis parallel thereto.

In an example, the first tooth unit comprises a first tooth element and a second tooth element that are arranged on the movable part. The second tooth unit comprises a fifth tooth element that engages the first tooth element in case of the radial displacement of the movable part in a first orientation along the first radial displacement direction. The second tooth unit comprises a sixth tooth element that engages the second tooth element in case of a radial displacement of the movable part in the second orientation along the first radial displacement direction. The second orientation is opposite to the first orientation. The first tooth element and the second tooth element may be ring-shaped tooth elements or ring-sector-shaped tooth elements. A rotational symmetry axis of the ring-shaped tooth elements or the ring-sector-shaped tooth elements may be identical or parallel to the axial displacement axis. The first tooth element and the second tooth element may both be arranged on a radially inner surface of the movable part or on a radially outer surface of the movable part. Alternatively, the first tooth element may be arranged on the radially inner surface of the movable part and the second tooth element may be arranged on the radially outer surface of the movable part or vice versa. The fifth tooth element and/or the sixth tooth element may be a single tooth or a protrusion. If the movable part is displaced along the first radial displacement direction, either the first tooth element may engage the fifth tooth element or the second tooth element may engage the sixth tooth element. This is because a distance between the first tooth element and the fifth tooth element may be reduced if the movable part is radially displaced along the first radial displacement direction in the first orientation. At the same time, a distance between the second tooth element and the sixth tooth element may be increased. If the movable part is radially displaced along the first radial displacement direction in the second orientation, which is opposite the first orientation, a distance between the second tooth element and the sixth tooth element may be reduced. At the same time, a distance between the first tooth element and the fifth tooth element may be increased. This has the effect that the user may be provided with a dedicated haptic feedback that results either from an engagement of the first tooth element and the fifth tooth element or from an engagement of the second tooth element and the sixth tooth element. In particular, the dedicated haptic feedback may be a different haptic feedback depending on the orientation of the radial displacement of the movable part along the first radial displacement axis. In other words, a different haptic feedback may be provided to the user upon rotation of the movable part if the movable part is radially displaced into a West direction than if the movable part is radially displaced into an East direction.

In an example, the fifth tooth element and the first tooth element are engageable in a rotatable and ratcheting manner. Additionally or alternatively, the sixth tooth element and the second tooth element are engageable in a rotatable and ratcheting manner. This means that there is a degree of slippage between the first tooth element and the fifth tooth element and/or between the second tooth element and the sixth tooth element that is different from zero, if the movable part is moved in the associated radial direction and orientation. The first tooth element and the second tooth element may both comprise an array or group of teeth, wherein a spacing of the teeth may be different between the first tooth element and the second tooth element. Due to the different spacing between teeth of the first tooth element and of the second tooth element, a different haptic feedback may be provided to the user while rotating the movable part around an axis parallel to the axial displacement axis in case the first tooth element engages the fifth tooth element than in case the second tooth element engages the sixth tooth element. Other ways of providing different haptic feedback including different sizes and/or different forms of teeth. Since the first orientation and the second orientation are opposite to each other on a linear axis of movement, i.e. on the first radial displacement direction, a different haptic feedback may be provided to the user while rotating the movable part around an axis parallel to the axial displacement axis depending on the orientation into which the movable part has been radially displaced.

In an example, the first tooth unit comprises a third tooth element and a fourth tooth element that are arranged on the movable part. The second tooth unit comprises a seventh tooth element that is engages with the third tooth element in case of a radial displacement of the movable part in a third orientation along the second radial displacement direction. The second tooth unit comprises an eighth tooth element, that engages the fourth tooth element in case of a radial displacement of the movable part in a fourth orientation along the second radial displacement direction. The third orientation is opposite to the fourth orientation. The third tooth element and the fourth tooth element may be ring-shaped or ring-sector-shaped tooth elements. A rotational symmetry axis of the ring-shaped tooth elements or ring-sector-shaped tooth elements may be identical or parallel to the axial displacement axis. The third tooth element and the fourth tooth element may both be arranged on the inner radial surface of the movable part or on the outer radial surface of the movable part. In particular, the third tooth element and the fourth tooth element may be a single ring-shaped or ring-sector-shaped tooth element. Alternatively, the third tooth element may be arranged on the inner radial surface of the movable part and the fourth tooth element may be arranged on the outer radial surface of the movable part or vice versa. The seventh tooth element and/or the eighth tooth element may be a single tooth or an array or group of teeth. If the movable part is displaced along the second radial displacement direction, either the third tooth element may engage the seventh tooth element or the fourth tooth element may engage the eighth tooth element. This is because a distance between the third tooth element and the seventh tooth element may be reduced if the movable part is radially displaced along the second radial displacement direction in the third orientation. At the same time, a distance between the fourth tooth element and the seventh tooth element may be increased. If the movable part is radially displaced along the second radial displacement direction in the fourth orientation, which is opposite the third orientation, a distance between the fourth tooth element and the eighth tooth element may be reduced. At the same time, a distance between the third tooth element and the seventh tooth element may be increased. This has the effect that the user may be provided with a dedicated haptic feedback that results either from an engagement of the third tooth element and the seventh tooth element or from an engagement of the fourth tooth element and the eighth tooth element. In particular, the dedicated haptic feedback may be a different haptic feedback depending on the orientation of the radial displacement of the movable part along the second radial displacement axis. In other words, a different haptic feedback may be provided to the user upon rotation of the movable part if the movable part is radially displaced into a North direction than if the movable part is radially displaced into a South direction.

In an example, the seventh tooth element and the third tooth element are engageable in a non-rotatable manner. Additionally or alternatively, the eighth tooth element and the fourth tooth element are engageable in a non-rotatable manner. In this context, non-rotatable means that there is no relative movement between the third tooth element and the seventh tooth element or between the fourth tooth element and the eighth tooth element. Of course, the third tooth element and the seventh tooth element as well as the fourth tooth element and the eighth tooth element may rotate relative to a frame element holding the user input device. This has the effect that a haptic feedback may be provided to the user that originates from a movement of the seventh tooth element and/or the eighth tooth element relative to the frame holding the user input device.

In an example, the seventh tooth element and/or the eighth tooth element are displaceable against a resilient element along a fifth direction that is parallel to a circumferential direction of the movable part. This means that if the third tooth element engages the seventh tooth element and the third tooth element is rotated around an axis parallel to the axial displacement axis of the movable part, the seventh tooth element may follow this rotation. Likewise, if the fourth tooth element engages the eighth tooth element and the fourth tooth element is rotated around an axis parallel to the axial displacement axis of the movable part, the eighth tooth element may follow this rotation. Since the seventh tooth element and/or the eighth tooth element follow said rotation parallel to a circumferential direction of the movable part, a distance between the seventh tooth element and/or the eighth tooth element and the respective axis parallel to the axial displacement axis of the movable part remains constant. This has the effect that an engagement of the third tooth element and the seventh tooth element and/or of the fourth tooth element and the eighth tooth element remains unchanged, i.e. remains in force, even though the movable part is being rotated around the respective axis parallel to the axial displacement axis. A frame or base element holding the user input device may mechanically support the resilient element. The seventh tooth element and/or the eighth tooth element being displaceable against the resilient element has the effect that the user who rotates the movable part may perceive a resisting force of the resilient element resisting the displacement of the seventh tooth element and/or of the eighth tooth element as a haptic feedback. In an example, the resisting force, and, thus, also the haptic feedback to the user, may increase the further the movable part is being rotated around the respective axis parallel to the axial displacement axis. In a further example, the resisting force may increase degressively, linearly or progressively.

In an example, the seventh tooth element and/or the eighth tooth element are displaceable against a ratcheting member along the fifth direction that is parallel to the circumferential direction of the movable part. This means that if the third tooth element engages the seventh tooth element and the third tooth element is rotated around an axis parallel to the axial displacement axis of the movable part, the seventh tooth element may follow this rotation. Likewise, if the fourth tooth element engages the eighth tooth element and the fourth tooth element is rotated around an axis parallel to the axial displacement axis of the movable part, the eighth tooth element may follow this rotation. Since the seventh tooth element and/or the eighth tooth element follow said rotation parallel to a circumferential direction of the movable part, a distance between the seventh tooth element and/or the eighth tooth element and the respective axis parallel to the axial displacement axis of the movable part remains constant. This has the effect that an engagement of the third tooth element and the seventh tooth element and/or of the fourth tooth element and the eighth tooth element remains unchanged, i.e. remains in force, even though the movable part is being rotated around the respective axis parallel to the axial displacement axis. A frame or base element holding the user input device may mechanically support the ratcheting member. The seventh tooth element and/or the eighth tooth element being displaceable against the ratcheting member has the effect that the user who rotates the movable part may perceive a varying, in particular periodically varying, resisting force or torque provided by the ratcheting member as haptic feedback if the seventh tooth element and/or the eighth tooth element is rotated relative to the ratcheting member. In an example, the varying resisting force or torque, and, thus, also the haptic feedback to the user, may comprise a sinusoidal-type and/or sawtooth-type variation as the movable part is being rotated around the respective axis parallel to the axial displacement axis. The resisting force or torque created by the ratcheting member as the seventh tooth element and/or the eighth tooth element is displaced, may, in an example, comprise uniform sequences of a varying resisting force or torque. In another example, an amplitude of the varying resisting force or torque may decrease or increase as the seventh tooth element and/or the eighth tooth element is displaced. In a further example, a wave length or periodicity of the varying resisting force or torque in terms of angular rotation of the movable part may increase or decrease the further the movable part is being rotated around the respective axis parallel to the axial displacement axis.

In an example, the user input device further comprises a centering means centering the movable part in a resting position in the absence of a manipulation. This means that if the movable part is not actively displaced along the first radial displacement direction and/or the second radial displacement direction, the movable part assumes a neutral position. In simplified words, the resting position or the neutral position may also be referred to as a middle position of the movable part. This has the effect that a user who wishes to move the movable part into a particular position, the user does not need to know into which position the movable part has previously been moved. The user may rely on the fact that the movable part is in the resting position as long it is not being actively displaced by a force and/or a torque that is exercised onto the movable part.

In an example, the first tooth unit further comprises an axial tooth element. The second tooth unit further comprises a third guiding means engaging the axial tooth element for providing a haptic feedback in case of a rotation of the movable part when in the resting position. This may mean that the haptic feedback may be provided by the axial tooth element only in case the movable part is not subject to any radial displacement. The haptic feedback may be created by an interaction between the axial tooth element and ridges or one or more teeth in the third guiding means. The haptic feedback that is provided from an interaction with the axial tooth element may be the same or maybe different from any haptic feedback that is provided through an interaction between any tooth elements of the first tooth unit other than the axial tooth element and any tooth elements of the second tooth unit.

In an example, the axial tooth element and the third guiding means engage in the resting position and disengage in case of a radial displacement of the movable part. The third guiding means may comprise a ring-shaped groove in a frame or base part holding the user input device. Alternatively, the groover may be ring-segment-shaped. A symmetry axis of the ring-shaped groove may be identical or at least parallel to the axial displacement axis of the movable part. The ring-shaped groove may comprise a V-shaped or semicircular cross-section. If the movable part is not being moved, the axial tooth element may be forced towards a lowest point in the third guiding element either by gravity and/or by a resilient element. It is understood that the axial tooth element, the third guiding means and the resilient element may be comprised in the centering means. In the unmoved state, the axial tooth element is said to engage the third guiding means. Consequently, a haptic feedback in case of the rotation of the movable part may be provided to the user by an interaction between the axial tooth element and the third guiding means. Also, the movable part may be centered in the resting position. If the movable part is subject to the radial displacement, the axial tooth element may be forced out of the lowest point in the third guiding element. In other words, the axial tooth element may be pushed out of the third guiding means. In this state, no haptic feedback may be provided to the user in case of the rotation of the movable part. This is due to the fact that there is no interaction between the axial tooth element and the third guiding means. Also, the movable part is not centered in the resting position. It is understood that, in an alternative, the guiding means may be part of the movable part and the axial tooth element may be part of the frame or base part holding the user input device.

In an example, the user input device further comprises a sensing unit for sensing one or more of the radial displacement, the axial displacement and the rotation of the movable part. For this purpose, the sensing unit may comprise a plurality of sensors. The sensors may comprise one or more tactile sensors like mechanical switches, one or more hall sensors, one or more indictive proximity sensors, one or more capacitive proximity sensors and/or one or more light sensors. Thus, the sensing unit may comprise the at least one sensing element for sensing the radial displacement of the movable part. In particular, the sensing unit may determine different degrees of rotation of the movable part. This may be accomplished by an encoder unit arranged on the movable part. Additionally or alternatively, this may be accomplished by a rotary potentiometer coupled to the movable part. The sensing unit has the effect that physical inputs made by the user to the user input device by the radial displacement, the axial displacement and/or the rotation of the movable part may be converted into electrical signals that may be received by a data processing apparatus coupled to the user input device. This data processing apparatus may trigger or adjust different functionalities of the vehicle depending on which electrical signal the data processing apparatus receives from which sensor of the sensing unit.

According to a second aspect, there is provided a vehicle comprising the user input device according to the first aspect. In such a vehicle, the user input device may act as a rotational dial in at least five different positions, i.e. in the resting position, in two positions at the extremes of the first radial displacement direction and in two positions at the extremes of the second radial displacement direction. Thus, at least five different functions of the vehicle may be adjusted making use of the user input device as a rotational dial. Moreover, a particular function of the vehicle may be activated or deactivated making use of the user input device as a pushbutton. Additionally or alternatively, pushing the movable part down along the axial displacement axis may serve as a confirmation of a selection of a particular function that the user has previously made. The particular functions of the vehicle that may be confirmed, activated, deactivated or adjusted may be the same or different functions than the at least five different functions of the vehicle that maybe adjusted making use of the user input device as a rotational dial. Furthermore, in such a vehicle, the user is provided with a haptic feedback in response to a torque or force that the user has applied to the movable part in order to rotate the movable part around the axial displacement axis or around an axis parallel thereto. The haptic feedback for the user may comprise an increasing or decreasing torque that the user has to overcome in order to rotate the movable part around the axial displacement axis or around the axis parallel thereto. Additionally or alternatively, the haptic feedback for the user may comprise a sinusoidal-type or a sawtooth-type torque that the user has to overcome in order to rotate the movable part around the axial displacement axis or around the axis parallel thereto. The type of the haptic feedback depends on a direction of the radial displacement. It is also understood that the type of the haptic feedback may be different in the resting position than in a radially displaced position. This has the effect that at least five different types of haptic feedback may be provided to the user upon rotation of the movable part. The type of the haptic feedback may indicate to the user which kind of function of the vehicle the user is currently adjusting and/or has been adjusting. Thus, usability of the user input device and, therefore, the vehicle is enhanced.

In an example, the user input device is configured to adjust one or more of:
- a user entertainment system of the vehicle,
- a heating, ventilation and air conditioning system of the vehicle,
- a driving function of the vehicle,
- a light of the vehicle,
- a driver assistance function, and
- a user profile setting.

Adjusting the user entertainment system of the vehicle may comprise adjusting a speaker volume and/or a display zoom of a display of the user entertainment system. Adjusting the heating, ventilation and air conditioning system of the vehicle may comprise adjusting a temperature of an interior of the vehicle, a ventilation intensity in the interior of the vehicle, a heating of a seat on which a user is sitting while driving in the vehicle, a heating of a steering wheel of the vehicle, a front window defroster and/or a rear window defroster. Adjusting a driving function of the vehicle may comprise adjusting a recuperation intensity, provided that the vehicle comprises a traction battery such as in a hybrid vehicle, a fully electric vehicle or a fuel cell vehicle. Moreover, adjusting a driving function of the vehicle may comprise adjusting a drive mode of the vehicle between, for example, efficiency mode, normal cruise mode or sport mode. Adjusting a light of the vehicle may comprise switching a fog light or hazard lights of the vehicle on or off. Adjusting a driver assistance function may comprise adjusting speed limit warnings and/or driver alert systems, for example collision pre sense systems. Adjusting a user profile setting may comprise adjusting a configuration of one or more of the above introduced functionalities that is linked to a specific user. Moreover, adjusting a user profile setting may comprise settings like an orientation of side mirrors, a position of the seat on which the user is sitting while driving in the vehicle and/or a position of the steering wheel.

The above functionalities may be adjusted using a data processing apparatus coupled to the user input device upon receipt of an electric signal from the one or more sensing units of the user input device. To this end, the data processing apparatus is communicatively connected to the user input device. Also, the data processing apparatus is communicatively connected to the relevant system of the vehicle, e.g. the user entertainment system, the heating, ventilation and air conditioning system, a driving function system, a light system, a driver assistance function system and/or a user profile system. This has the effect that the user of the vehicle may control functionalities of the vehicle through the user input device that may facilitate driving or that may make driving more enjoyable.

It should be noted that the above examples may be combined with each other irrespective of the aspect involved.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows a vehicle according to the present disclosure comprising a user input device according to the present disclosure,
- Figure 2: shows possible directions of a radial displacement and of a rotation of the user input device of Figure 1 in a top view,
- Figure 3: shows possible directions of an axial displacement of the user input device of Figure 1 in a side view,
- Figure 4: shows a schematic view of a first example of the user input device of Figure 1, wherein in the first example a haptic feedback unit comprises an electric motor,
- Figure 5: shows a schematic view of a second example of the user input device of Figure 1, wherein in the second example the haptic feedback unit comprises a second tooth unit,
- Figure 6: shows a cross sectional view of a third example of the user input device of Figure 1, wherein in the third example the haptic feedback unit comprises an electric motor,
- Figure 7: shows a perspective view of the user input device of Figure 6,
- Figure 8: shows a top view of a fourth example of the user input device of Figure 1, wherein in the fourth example the haptic feedback unit comprises a second tooth unit,
- Figure 9: shows a partly exploded perspective view of the user input device of Figure 8,
- Figure 10: shows a cross sectional view along sectional line A-A of the user input device of Figure 8, and
- Figure 11: shows a perspective view of the user input device of Figure 8.

### DETAILED DESCRIPTION

The Figures are merely schematic representations and serve only to illustrate examples of the disclosure. Identical or equivalent elements are in principle provided with the same reference signs.

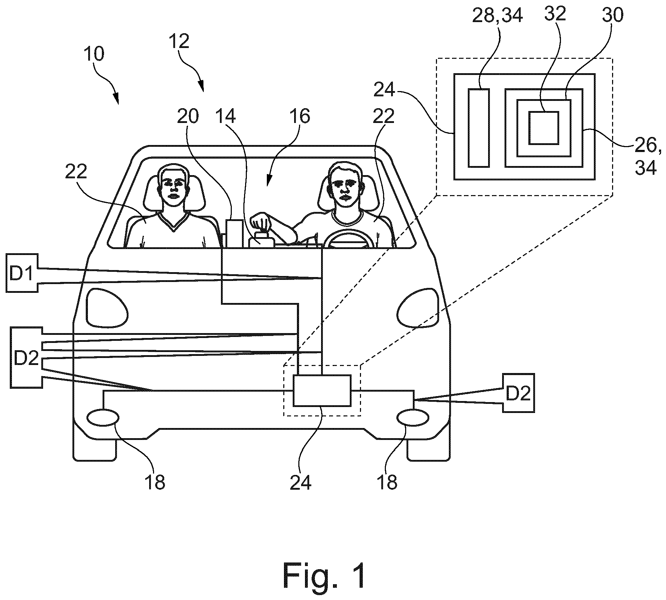

Figure 1 shows a vehicle 10.

The vehicle 10 comprises a user input system 12. The user input system 12 comprises a user input device 14 in an interior 16 of the vehicle 10.

Moreover, the vehicle 10 comprises fog lights 18 and a screen 20 for displaying information, e.g. a map of a navigation system, to a user 22 of the vehicle 10.

In the example of Figure 1, two users 22 are sitting in the interior 16 of the vehicle 10. The two users 22 may also be called occupants of the vehicle 10. The user 22 on the left is a passenger and the user 22 on the right is a driver of the vehicle 10. Any one of the users 22 may move the user input device 14 using one of their hands.

The user input device 14 is placed on an instrument panel in the interior 16 of the vehicle 10 such that users 22 sitting in front seats of the vehicle 10 can comfortably reach the user input device 14. It is understood that the user input device 14 may equally be placed on a center console in the interior 16 of the vehicle 10. Moreover, the user input device 14 may be placed in a back of the interior 16 of the vehicle 10 such that users 22 sitting in back seats of the vehicle 10 can comfortably reach the user input device.

Furthermore, the user input system 12 comprises a data processing apparatus 24.

The data processing apparatus 24 is communicatively connected to the user input device 14. Thus, the data processing apparatus 24 may receive first data D1 indicative of a manipulation or movement of the user input device 14.

The data processing apparatus 24 is also communicatively connected to the fog lights 18 and the screen 20. Thus, the data processing apparatus 24 may provide second data D2 to the fog lights 18 and/or to the screen 20. The second data D2 may also be referred to as a control signal.

To this end, the data processing apparatus 24 comprises a data storage unit 26 and a data processing unit 28.

The data storage unit 26 comprises a computer-readable storage medium 30.

On the computer-readable storage medium 30, there is provided a computer program 32.

The computer program 32 and, thus, also the computer-readable storage medium 30, comprise instructions which, when executed by the data processing unit 28, or, more generally speaking, a computer, cause the computer or the data processing unit 28 to carry out a method for adjusting a functionality of a vehicle 10.

Consequently, the data storage unit 26 and the data processing unit 28 form means 34 for carrying out the method for adjusting a functionality of a vehicle 10.

The method for adjusting a functionality of the vehicle 10 provides the control signal, i.e. second data D2, based on the first data D1 indicative of a manipulation or movement of the user input device 14.

In the present example, the functionality of the vehicle 10 to be adjusted are the fog lights 18 and/or the screen 20. The control signal provided by the method for adjusting a functionality of a vehicle 10 may cause the fog lights 18 to be switched on or off. Moreover, the control signal may cause a zoom on the screen 20 to be adjusted.

It is noted that the functionality of adjusting the fog lights 18 and/or the screen are purely illustrative as will become clear from the following explanations.

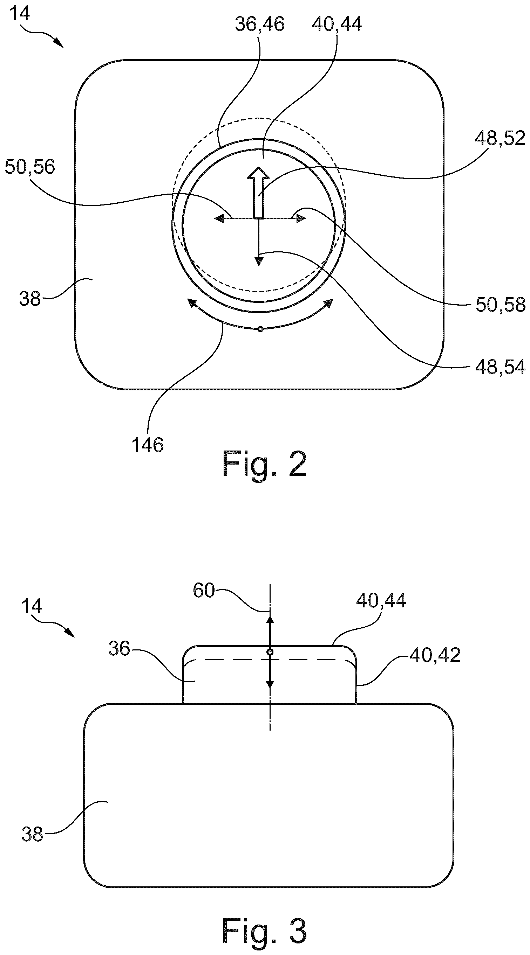

Figures 2 and 3 show the user input device 14 in a schematic representation. Moreover, possible manipulations or movements of the user input device 14 are indicated.

The user input device 14 comprises a movable part 36. The movable part 36 is supported on a frame element 38, which is a fixed component in the interior 16 of the vehicle 10. The frame element 38 may also be called a base unit or base element.

The movable part 36 comprises a manipulation interface 40 for a user 22 of the vehicle 10 to move movable part 36. In the present examples, the manipulation interface 40 comprises a lateral cylinder surface 42 and a cylinder top surface 44 since in the present example, the movable part 36 is shaped as a circular cylinder.

The movable part 36 may be arranged in a resting position 46. The resting position 46 is a neutral position that the movable part 36 assumes in an absence of any manipulation. The resting position 46 may be defined relative to the frame element 38.

By applying a pushing force onto the lateral cylinder surface 42, the movable part 36 may be radially displaced along a first radial displacement direction 48 and along a second radial displacement direction 50. The first radial displacement direction 48 is perpendicular to the second radial displacement direction 50.

The first radial displacement direction 48 comprises a first orientation 52, which may also be called a north orientation. The first radial displacement direction 48 further comprises a second orientation 54, which may also be called a south orientation. The first orientation 52 is opposite the second orientation 54 on the first radial displacement direction 48.

The second radial displacement direction 50 comprises a third orientation 56, which may also be called a west orientation. Moreover, the second radial displacement direction 50 comprises a fourth orientation 58, which may also be called an east orientation. The third orientation 56 is opposite the fourth orientation 58 on the second radial displacement direction 50.

Thus, it is understood that applying a pushing force onto the lateral cylinder surface 42 is a form of manipulating or moving the movable part 36. It is further understood that the user input device 14 only allows a radial displacement of the movable part either along the first radial displacement direction 48 or along the second radial displacement direction 50 at a time.

In Figure 2, the resting position 46 of the movable part 36 is shown by two solid circles. A radial displacement along the first radial displacement direction 48 into the first orientation 52, i.e. the north orientation, is shown by a wide arrow and a dashed circle.

In the present example, a zoom of the screen 20 is adjusted by radially displacing the movable part 36 into the north orientation and additionally rotating the movable part 36 in that position.

By applying a torque onto the lateral cylinder surface 42 whose rotation axis is identical to a central axis of the lateral cylinder surface 42, the movable part 36 may be rotated around the central axis of the lateral cylinder surface in a clockwise or in a counterclockwise direction.

Thus, it is understood that applying a torque onto the lateral cylinder surface 42 is also a form of manipulating or moving the movable part 36. It is further understood that the user input device 14 allows rotating the movable part 36 in any direction when in the resting position 46 or when in any of the radially displaced positions (north, south, west and east orientation).

By applying a pushing force onto the cylinder top surface 44, the movable part 36 may be axially displaced along an axial displacement axis 60. In case the movable part 36 is in the resting position 46, the center axis of the lateral cylinder surface is identical to the axial displacement axis 60. The axial displacement axis 60 is perpendicular to the first radial displacement direction 48 and perpendicular to the second radial displacement direction 50.

In simplified words, the movable part 36 may be pushed down along the axial displacement axis 60 by applying a pushing force onto the cylinder top surface 44. When the pushing force onto the cylinder top surface 44 is released, the movable part assumes the resting position 46 again.

In Figure 3, the resting position 46 of the movable part 36 is represented by a solid line. An axially displaced position is represented by a dashed line.

In the present example, the fog lights 18 are switched on or off by axially displacing the movable part 36 along the axial displacement axis 60.

In another example, a user entertainment system of the vehicle 10 may be switched on or off by axially displacing the movable part 36 along the axial displacement axis 60. A rotation of the movable part 36 around the axial displacement axis 60 when in the north orientation could activate (clockwise rotation) or deactivate (counterclockwise rotation) the fog lights 18.

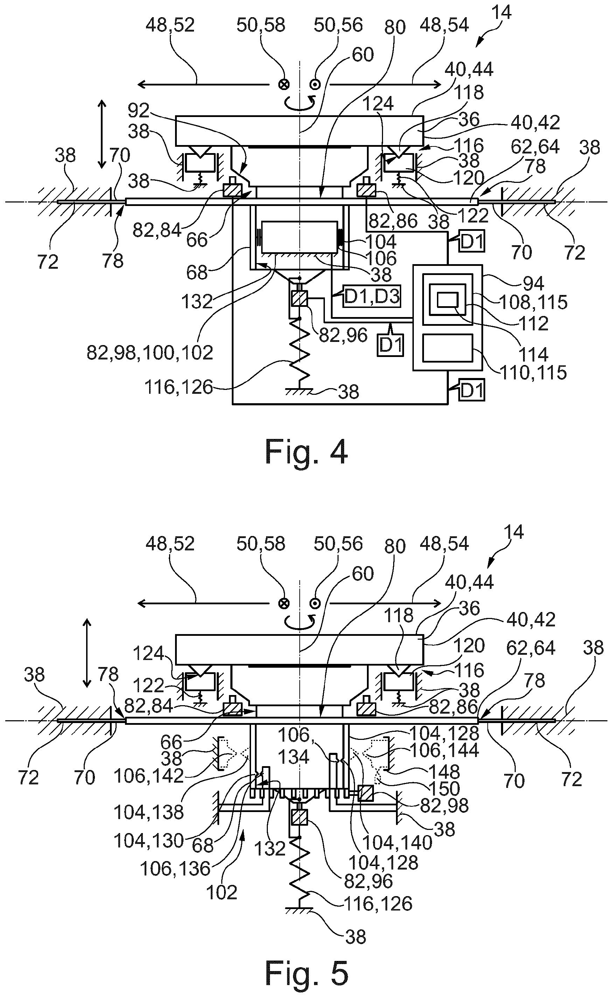

In the following, details of a functional mechanism of the user input device 14 will be explained at four different examples. The first example will be described with reference to Figure 4.

The user input device 14 of Figure 4 comprises a first guiding means 62. The first guiding means 62 confines the radial displaceability of the movable part 36 to a purely linear movement along the first radial displacement direction 48 or along the second radial displacement direction 50.

It is emphasized that the movable part 36 is not subject to any tilting during the radial displacement. This means that the radial displacement is a purely translatory movement.

To this end, the first guiding means 62 comprises a first cage 64 having a circular cut out in its center. The circular cut out tightly engages with a groove 66 in an outer surface 68 of the movable part 36. The first cage 64 of the first guiding means 62 is supported on the frame element 38 of the interior 16 of the vehicle 10 by two rods 70 that are oriented in parallel to the first radial displacement direction 48. The two rods 70 of the first cage 64 fit into cylindrical holes 72 in the frame element 38. The first cage 64 may move, i.e. slide, relatively to said rods 70. Due to this, the first cage 64 constrains the radial displaceability of the movable part 36 along the first radial displacement direction 48.

It is understood that in Figure 4, only the first cage 64 is shown, which confines the radial displaceability of the movable part 36 along the first radial displacement direction 48. A second cage 74 that confines the radial displaceability of the movable part 36 along the second radial displacement direction 50 is not shown for reasons of a better overview. The second cage 74 is supported on the first cage 64 by rods 76 that are oriented in parallel to the second radial displacement direction 50. These rods 76 fit into cylindrical holes 78 in the first cage 64. The second cage 74 may move, i.e. slide, relative to these rods 76. Due to this, the second cage 74 constrains the radial displaceability of the movable part 36 along the second radial displacement direction 50.

The user input device 14 of Figure 4 further comprises a second guiding means 80. The second guiding means 80 confines the axial displaceability of the movable part along the axial displacement axis 60.

To this end, the circular cut out in the first cage 64 and a circular cut out in the second cage 74, which tightly engage with the groove 66 on the outer surface 68 of the movable part 36, serve as second guiding means 80.

Since both circular cut outs in the first cage 64 and in the second cage 74 are of a circular shape and the groove 66 on the outer surface 68 of the movable part 36 is also of a circular shape, both circular cut outs allow a rotation of the movable part 36 around the axial displacement axis 60.

The user input device 14 further comprises a sensing unit 82. The sensing unit 82 comprises a first sensing element 84 and a second sensing element 86 for sensing the radial displacement of the movable part 36 along the first radial displacement direction 48. Moreover, the sensing unit 82 comprises a third sensing element 88 and a fourth sensing element 90 for sensing the radial displacement of the movable part 36 along the second radial displacement direction 50. To this end, the movable part 36 comprises a circular chamfer 92 that is arranged on the outer surface 68 of the movable part 36.

If for example, the movable part 36 is displaced along the first radial displacement direction 48 into the first (north) orientation 52, the first sensing element 84 is contacted by the chamfer 92. Upon contact, first data D1 indicative of the radial displacement of the movable part 36 into the first orientation 52 is generated by the first sensing element 84 and provided to a data processing apparatus 94. The same applies if the movable part 36 is displaced along any other of the radial orientations.

The sensing unit 82 further comprises a fifth sensing element 96 arranged at the bottom of the movable part 36. If the movable part 36 is axially displaced by a pushing force pushing it down along the axial displacement axis 60, the fifth sensing element 96 generates first data D1 indicative of the axial displacement of the movable part 36. Again, the first data D1 is provided to the data processing apparatus 94.

The sensing unit 82 further comprises a sixth sensing element 98. The sixth sensing element 98 comprises a magnet encoder for sensing the rotation of the movable part 36 around the axial displacement axis 60. The magnet encoder is mounted to an electric motor 100 arranged in an interior of the movable part 36. If the movable part 36 is rotated around the axial displacement axis 60, the sixth sensing element 98 generates first data D1 indicative of the rotation of the movable part 36. Again, the first data D1 is provided to the data processing apparatus 94.

The user input device 14 further comprises a haptic feedback unit 102. In the first example shown in Figure 4, the haptic feedback unit 102 comprises the electric motor 100.

The electric motor 100 is affixed to the frame element 38 of the interior 16 of the vehicle 10. Moreover, the electric motor 100 is coupled to the movable part 36 via a first tooth unit 104 and a second tooth unit 106. The first tooth unit 104 engages with the second tooth unit 106 such that the electric motor 100 and, thus, also the magnet encoder rotates as the movable part 36 is rotated around the axial displacement axis 60.

In this first example, the first tooth unit 104 and the second tooth unit 106 act as a transmission between the electric motor 100 and the movable part 36. Thus, a speed and a torque provided by the electric motor 100 may be adjusted through the first tooth unit 104 and the second tooth unit 106. For this purpose in the first example, the first tooth unit 104 and the second tooth unit 106 are permanently engaged irrespective of the movable part 36 being in the resting position 46 or in any other radially displaced orientation 52, 54, 56, 58. In particular, the first tooth unit 104 and the second tooth unit 106 do not engage in a ratcheting manner in this first example. In an alternative of the first example in which the haptic feedback unit 102 still comprises an electric motor 100, there may be a fixed connection between the electric motor 100 and the movable part 36 without a transmission and thus without the first tooth unit 104 and the second tooth unit 106.

As already mentioned above, in the first example of the user input device 14 shown in Figure 4, the user input device 14 comprises a data processing apparatus 94. The first data processing apparatus 94 is communicatively connected to the sensing elements 84, 86, 88, 90, 96, 98 of the sensing unit 82. Thus, the data processing apparatus 94 may receive first data D 1 indicative of manipulation or movement of the user input device 14 from the sensing unit 82.

Moreover, the data processing apparatus 94 is communicatively connected to the electric motor 100. Thus, the data processing apparatus 94 may provide third data D3 to the electric motor 100. The third data D3 may also be referred to as a control signal.

To this end, the data processing apparatus 94 comprises a data storage unit 108 and a data processing unit 110.

The data storage unit 108 comprises a computer-readable storage medium 112.

On the computer-readable storage medium 112, there is provided a computer program 114.

The computer program 114 and, thus, also the computer-readable storage medium 112, comprise instructions which, when executed by the data processing unit 110, or, more generally speaking, a computer, cause the computer or the data processing unit 110 to carry out a method for providing a haptic feedback to a user 22 of a vehicle 10.

Consequently, the data storage unit 108 and the data processing unit 110 form means 115 for carrying out the method for providing a haptic feedback to a user 22 of a vehicle 10.

The method for providing a haptic feedback to a user 22 of a vehicle 10 provides a control signal, i.e. third data D3, to the electric motor 100 based on the first data D1 indicative of a manipulation or movement of the user input device 14.

The haptic feedback to the user 22 is generated by the electric motor 100 in response to the rotation of the movable part 36 around the axial displacement axis 60. To this end, the electric motor 100 creates a torque that counteracts the rotation of the movable part 36 around the axial displacement axis 60 effected by the user.

A profile of the created torque may comprise a sinusoidal-type torque or a sawtooth-type torque. The profile may depend on the orientation 52, 54, 56, 58 into which the movable part 36 is radially displaced. Moreover, the profile may depend on an angular position of the movable part 36 and/or on an angular speed of rotation of the movable part 36.

However, it is understood that the torque created by the electric motor 100 does not exceed the torque that is applied to the lateral cylinder surface 42 of the movable part 36 by the user 22. Thus, the torque created by the electric motor 100 does neither prohibit the rotation of the movable part 36 by the user 22 nor rotate the movable part 36 back into an initial position of the movable part 36 prior to the rotation.

It is noted that in the above examples, the data processing apparatus 24, the associated data storage unit 26, the associated data processing unit 28, the associated computer-readable storage medium 30, the associated computer program 32 and the associated means 34 have been described separately from the data processing apparatus 94, the associated data storage unit 108, the associated data processing unit 110, the associated computer-readable storage medium 112, the associated computer program 114 and the associated means 115. This is one possible configuration. However, it is also possible that the only one data processing apparatus, only one data storage unit, only one data processing unit, only one computer-readable storage medium, and only one computer program are provided which combine the functionalities of the above-mentioned data processing apparatuses and associated components.

The user input device 14 further comprises a centering means 116 centering the movable part 36 in the resting position 46. The centering means 116 comprises axial tooth element 118 arranged at the movable part 36. The axial tooth element 118 engages with a third guiding means 120.

The third guiding means 120 is supported on the frame element 38 of the interior 16 of the vehicle 10 by a first resilient element 122. Furthermore, the third guiding means 120 comprises a circular groove 124. During a rotation of the movable part 36 around the axial displacement axis 60 in the resting position 46, the axial tooth element 118 is guided by the circular groove 124 of the third guiding means 120.

The centering means 116 further comprises a second resilient element 126. The second resilient element 126 counteracts the first resilient element 122 such that the movable part 36 is held at an equilibrium height along the axial displacement axis 60 in an absence of any axial displacement.

In case of a pushing force acting onto the lateral cylinder surface 42 of the movable part 36 and the consequential radial displacement of the movable part 36, the axial tooth element 118 partly slips out of the groove 124 in the third guiding means 120. In other words, the axial tooth element 118 disengages from the third guiding means 120.

If said pushing force is removed, the axial tooth element 118 fully engages with the groove 124 in the third guiding means 120 again. Due to this mechanism, the movable part 36 is kept in a middle position, i.e. the neutral position.

A second example of the user input device 14 will be explained in connection with Figure 5. Only the differences with respect to the first example shown in Figure 4 will be elaborated on.

In the second example, the haptic feedback unit 102 does not comprise an electric motor 100. Instead, it comprises a second tooth unit 106. The movable part 36 comprises a first tooth unit 104. The first tooth unit 104 and the second tooth unit 106 do not engage with each other in the resting position 46 of the movable part 36. The first tooth unit 104 and the second tooth unit 106 only engage each other in case of a radial displacement of the movable part 36.

The first tooth unit 104 comprises a first tooth element 128 and a second tooth element 130, both arranged on an inner surface 132 of the movable part 36.

The first tooth element 128 and the second tooth element 130 are separate circular arrangements of teeth on the inner surface 132 of the movable part 36 covering a circumferential portion of the surface 132.

The second tooth unit 106 comprises a fifth tooth element 134 and a sixth tooth element 136, which are both fixed to the frame element 38 of the interior 16 of the vehicle 10.

The fifth tooth element 134 engages the first tooth element 128 in case of a radial displacement of the movable part 36 in the first (north) orientation 52 along the first radial displacement direction 48.

The sixth tooth element 136 engages the second tooth element 130 in case of a radial displacement of the movable part 36 in the second (south) orientation 54 along the first radial displacement direction 48.

Both the fifth tooth element 134 and the first tooth element 128 as well as the sixth tooth element 136 and the second tooth element 130 engage each other in a rotatable and ratcheting manner. This means that, when the movable part 36 is rotated around the axial displacement axis 60 in a radially displaced position along the first radial displacement direction 48, either the fifth tooth element 134 slides over teeth of the first tooth element 128 or the sixth tooth element 136 slides over teeth of the second tooth element 130.

As the respective tooth elements 128, 130, 134, 136 slide over each other, a haptic feedback in response to the rotation of the movable part 36 is created for the user 22.

It is understood that an angular spacing of the teeth of the first tooth element 128 and of the second tooth element 130 may be different from each other. Thus, the user 22 may receive a haptic feedback upon the rotation of the movable part 36 that is different in case the movable part 36 is displaced into the first orientation 52 or into the second orientation 54. Other ways of generating different haptic feedback include varying a size and/or a form of the teeth.

The first tooth unit 104 further comprises a third tooth element 138 and a fourth tooth element 140. Both the third tooth element 138 and the fourth tooth element 140 are arranged on an outer surface 68 of the movable part 36.

The second tooth unit 106 comprises a seventh tooth element 142 and an eighth tooth element 144. The seventh tooth element 142 and the eighth tooth element 144 are displaceable along a fifth direction 146 that is parallel to a circumferential direction of the movable part 36 against a third resilient element. To this end, the seventh tooth element 142 and the eighth tooth element 144 are guided by a circumferential guide 148 that is affixed to the frame element 38 of the interior 16 of the vehicle 10.

The seventh tooth element 142 engages with the third tooth element 138 in case of the radial displacement of the movable part 36 in the third (west) orientation 56 along the second radial displacement direction 50. The eighth tooth element 144 engages with the fourth tooth element 140 in case of the radial displacement of the movable part 36 in the fourth (east) orientation 58 along the second radial displacement direction 50.

It is noted that the third tooth element 138, the fourth tooth element 140 as well as the seventh tooth element 142 and the eighth tooth element 144 are drawn in a dotted manner in Figure 5. This is to indicate that the third tooth element 138, the fourth tooth element 140, the seventh tooth element 142 and the eighth tooth element 144 do not lie in the same sectional plane through the user input device 14 as the first tooth element 128, the second tooth element 130, the fifth tooth element 134 and the sixth tooth element 136. Instead, the third tooth element 138, the fourth tooth element 140, the seventh tooth element 142 and the eighth tooth element 144 are rotated with respect to the first tooth element 128, the second tooth element 130, the fifth tooth element 134 and the sixth tooth element 136 by 90° around the axial displacement axis 60.

The seventh tooth element 142 and the third tooth element 138 engage each other in a non-rotatable manner. This means that there is no slippage between the seventh tooth element 142 and the third tooth element 138 in case of an engagement between these two tooth elements 142, 138. Hence, in case of an engagement between the seventh tooth element 142 and the third tooth element 138 and in case of a simultaneous rotation of the movable part 36 around the axial displacement axis 60, the seventh tooth element 142 rotates around the axial displacement axis 60 at the same angular rotational speed as the third tooth element 138. Thus, the seventh tooth element 142 is displaced in the fifth direction 146 parallel to the circumferential direction of the movable part 36.

Also, the eighth tooth element 144 and the fourth tooth element 140 engage each other in a non-rotatable manner. This means that there is no slippage between the eighth tooth element 144 and the fourth tooth element 140 in case of an engagement between these two tooth elements 144, 140. Hence, in case of an engagement between the eighth tooth element 144 and the fourth tooth element 140 and in case of a simultaneous rotation of the movable part 36 around the axial displacement axis 60, the eighth tooth element 144 rotates around the axial displacement axis 60 at the same angular rotational speed as the fourth tooth element 140. Thus, the eighth tooth element 144 is displaced in the fifth direction 146 parallel to the circumferential direction of the movable part 36.

Still in the second example of the user input device 14 shown in Figure 5, the eighth tooth element 144 is displaced against a ratcheting member 150 along the fifth direction 146 in case of an engagement between the eighth tooth element 144 and the fourth tooth element 140 and in case of a simultaneous rotation of the movable part 36 around the axial displacement axis 60.

Hence, the user 22 is provided with a different haptic feedback depending on whether the movable part 36 is rotated while radially displaced in the third orientation 56 or while radially displaced in the fourth orientation 58. In the third orientation 56, the user 22 is only provided with an increasing restoring force created by the circumferential displacement of the seventh tooth element 142 against the third resilient element 147. In the fourth orientation 58, the user 22 is also provided with a sinusoidal and/or sawtooth-type haptic feedback caused by the ratcheting movement between the eighth tooth element 144 and the ratcheting member 150.

The resilient element 147 may be formed as a spring.

In the first example shown in figure 4, a haptic feedback for the user 22 in response to the rotation of the movable part 36 in the resting position 46 was provided by the electric motor 100. In the second example shown in Figure 5, the haptic feedback in the resting position 46 is provided by ridges arranged in the circular groove 124 of the third guiding means 120. As the axial tooth element 118 engages the groove 124 of the third guiding means 120 in the resting position 46, the axial tooth element 118 moves relative to the ridges in the groove 124 during the rotation around the axial displacement axis 60.

It is understood that a spacing, form or size of the ridges in the groove 124 of the third guiding means 120 may be different from a spacing of the teeth of the first tooth element 128, of the second tooth element 130 and/or of the ratcheting member 150 such that the user 22 rotating the movable part 36 of the user input device 14 may clearly sense from the haptic feedback in which position and/or orientation the user 22 is rotating the movable part 36.

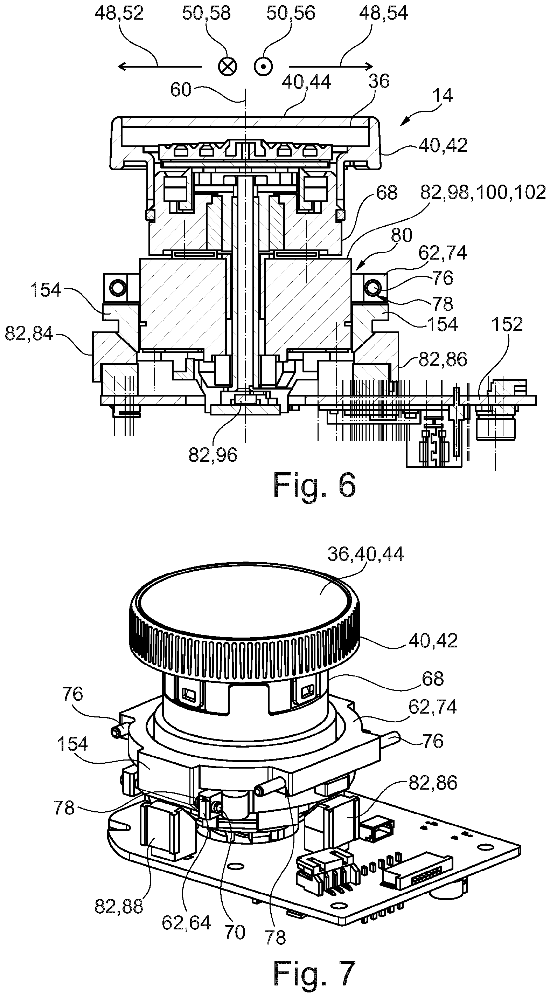

A third example of the user input device 14 is shown in Figures 6 and 7. As in the third example of the user input device 14 the haptic feedback unit comprises an electric motor, only differences with respect to the first example as shown in Figure 4 will be explained.

The user input device 14 of the third example is mounted to a circuit board 152. On the circuit board 152, the sensing elements 84, 86, 88, 90 of the sensing unit 82 are arranged.

Moreover, particularly the perspective view provided in Figure 7 shows the first cage 64 and the second cage 74, which form the first guiding means 62 and the second guiding means 80.

It can be seen that the first cage 64 is suspended by first rods 70, of which only one is shown for reasons of perspective view, on the second cage 74. In other words, the first cage 64 and the second cage 74 form an assembly. Said rods 70 extend in parallel to the first radial displacement direction 48. Only the second cage 74 comprises second rods 76 that directly support the second cage 74 on the frame element 38 of the interior 16 of the vehicle 10. Said rods 76 extend in parallel to the second radial displacement direction 50. The first cage 64 is only indirectly supported on the frame element 38 of the interior 16 of the vehicle 10 via the second cage 74.

The chamfer 92 that contacts the first sensing element 84, the second sensing element 86, the third sensing element 88 and/or the fourth sensing element 90 in case of a radial displacement of the movable part 36 is not a singular circular chamfer 92 arranged on the outer surface 68 of the movable part 36. Instead, said chamfer 92 is made up of four separate chamfered parts 154 attached to the assembly of the first cage 64 and the second cage 74.

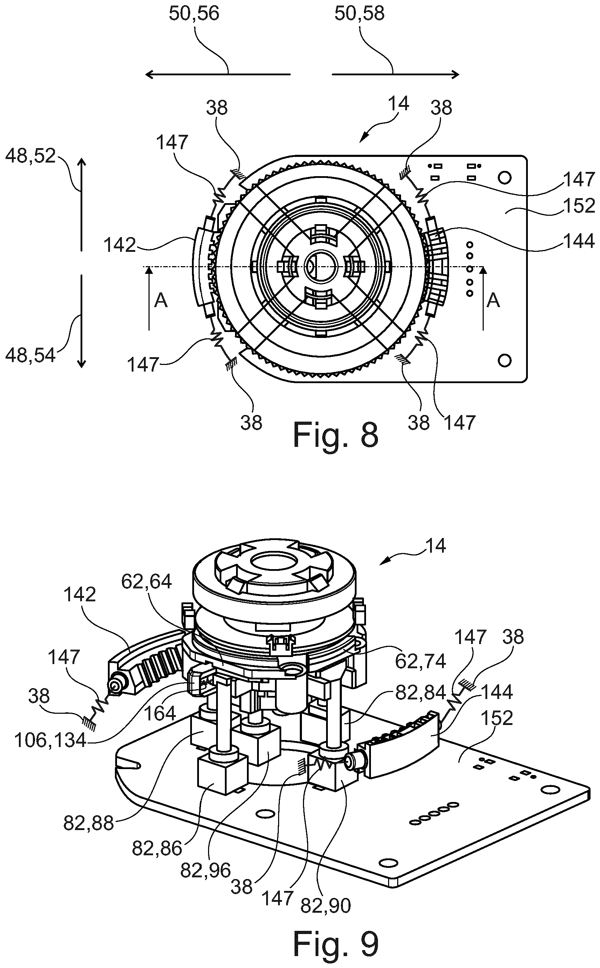

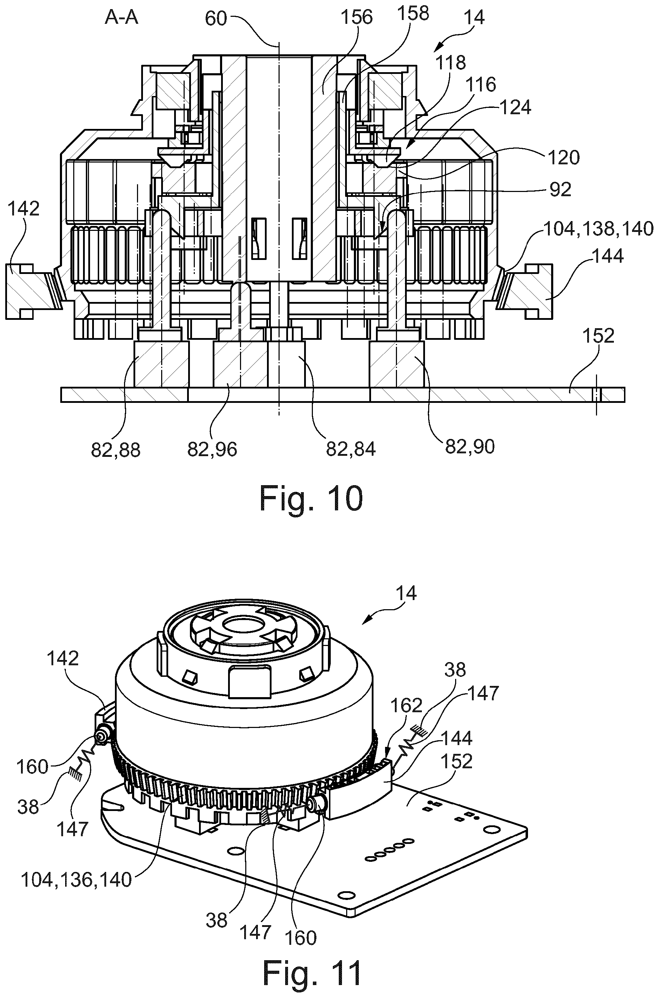

A fourth example of the user input device 14 is shown in Figures 8 to 11. As in the fourth example of the user input device the haptic feedback unit 102 comprises the first tooth unit 104 and the second tooth unit 106, only differences with respect to the second example shown in Figure 5 will be explained.

Again, the user input device 14 of the fourth example is mounted to a circuit board 152. On the circuit board 152, the sensing elements 84, 86, 88, 90 of the sensing unit 82 are arranged.

The movable part 36 of the fourth example of the user input device 14 comprises an inner cylinder 156. Around the inner cylinder 156, a sleeve 158 is arranged that comprises the circular chamfer 92 that contacts the first sensing element 84, the second sensing element 86, the third sensing element 88 and/or the fourth sensing element 90 in case of a radial displacement of the movable part 36.

Moreover, it can be seen that the third tooth element 138 and the fourth tooth element 140 are made up of a single circular arrangement of teeth on the outer surface 68 of the movable part 36.

The seventh tooth element 142 and the eighth tooth element 144 engaging with the third tooth element 138 and the fourth tooth element 140, respectively, each comprise extensions 160 in the fifth direction 146 parallel to the circumferential direction of the movable part 36. These extensions 160 serve as centering means for the third resilient elements 147 that create a restoring force as haptic feedback in response to the circumferential displacement of the seventh tooth element 142 and the eighth tooth element 144.

The resilient element 147 may be formed as a spring.

Moreover, it can be seen that the eighth tooth element 144 comprises teeth on its top surface 162. These teeth engage with the ratcheting member 152, which is affixed to the frame element 38 of the interior 16 of the vehicle 10 holding the user input device 14.

Furthermore, a fourth resilient element 164 is drawn-in, which pushes the fifth tooth element 134 in a radially outward direction such that it may engage with the first tooth element 128 in a ratcheting manner. It is understood that also the sixth tooth element 136 may be pushed radially outwards by a fourth resilient element 164 such that it may engage with the second tooth element 130 in a ratcheting manner.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 10: vehicle
- 12: user input system
- 14: user input device
- 16: interior
- 18: fog lights
- 20: screen
- 22: user
- 24: data processing apparatus
- 26: data storage unit
- 28: data processing unit
- 30: computer-readable storage medium
- 32: computer program
- 34: means
- 36: movable part
- 38: frame element
- 40: manipulation interface
- 42: cylinder lateral surface
- 44: cylinder top surface
- 46: resting position
- 48: first radial displacement direction
- 50: second radial displacement direction
- 52: first orientation
- 54: second orientation
- 56: third orientation
- 58: fourth orientation
- 60: axial displacement axis
- 62: first guiding means
- 64: first cage
- 66: groove in outer surface of movable part
- 68: outer surface of movable part
- 70: rod parallel to first radial displacement direction
- 72: cylindrical hole in frame element
- 74: second cage
- 76: rod parallel to second radial displacement direction
- 78: cylindrical hole in cage
- 80: second guiding means
- 82: sensing unit
- 84: first sensing element
- 86: second sensing element
- 88: third sensing element
- 90: fourth sensing element
- 92: chamfer
- 94: data processing apparatus
- 96: fifth sensing element
- 98: sixth sensing element
- 100: electric motor
- 102: haptic feedback unit
- 104: first tooth unit
- 106: second tooth unit
- 108: data storage unit
- 110: data processing unit
- 112: computer-readable storage medium
- 114: computer program
- 115: means
- 116: centering means
- 118: axial tooth element
- 120: third guiding means
- 122: first resilient element
- 124: groove of third guiding means
- 126: second resilient element
- 128: first tooth element
- 130: second tooth element
- 132: inner surface of movable part
- 134: fifth tooth element
- 136: sixth tooth element
- 138: third tooth element
- 140: fourth tooth element
- 142: seventh tooth element
- 144: eighth tooth element
- 146: fifth direction
- 147: third resilient element
- 148: circumferential guide
- 150: ratcheting member
- 152: circuit board
- 154: chamfered part
- 156: inner cylinder
- 158: sleeve
- 160: extension
- 162: top surface of eighth tooth element
- 164: fourth resilient element

- D 1: first data
- D2: second data
- D3: third data

## Claims

1. A user input device (14) for an interior (16) of a vehicle (10), the user input device (14) comprising:
- a movable part (36) movable by a user (22),
- a first guiding means (62) coupled to the movable part (36) and confining a radial displaceability of the movable part (36) to a linear movement along a first radial displacement direction (48) and to a linear movement along a second radial displacement direction (50),
- a second guiding means (80) coupled to the movable part (36), confining an axial displaceability of the movable part (36) along an axial displacement axis (60) and allowing a rotation of the movable part (36) around the axial displacement axis (60), wherein the axial displacement axis (60) is perpendicular to both of the first radial displacement direction (48) and the second radial displacement direction (50), and
- a haptic feedback unit (102) for creating a haptic feedback for the user (22) in response to the rotation of the movable part (36), wherein a type of the haptic feedback depends on a direction of the radial displacement.

2. The user input device (14) according to claim 1, wherein the haptic feedback unit (102) comprises an electric motor (100) that is communicatively connected to at least one sensing element (84, 86, 88, 90) configured for sensing a radial displacement along the first radial displacement direction (48) and/or along the second radial displacement direction (50).

3. The user input device (14) according to claim 1,
wherein the movable part (36) comprises a first tooth unit (104),
wherein the haptic feedback unit (102) comprises a second tooth unit (106), and
wherein the first tooth unit (104) and the second tooth unit (106) engage with each other in case of a radial displacement of the movable part (36) along the first radial displacement direction (48) or along the second radial displacement direction (50).

4. The user input device (14) according to claim 3, wherein the first tooth unit (104) comprises a first tooth element (128) and a second tooth element (130) that are arranged on the movable part (36),
wherein the second tooth unit (106) comprises a fifth tooth element (134) that engages the first tooth element (128) in case of a radial displacement of the movable part (36) in a first orientation (52) along the first radial displacement direction (48),
wherein the second tooth unit (106) comprises a sixth tooth element (136) that engages the second tooth element (130) in case of a radial displacement of the movable part (36) in a second orientation (54) along the first radial displacement direction (48), and
wherein the second orientation (54) is opposite to the first orientation (52).

5. The user input device (14) according to claim 4, wherein the fifth tooth element (134) and the first tooth element (128) are engageable in a rotatable and ratcheting manner, and/or
wherein the sixth tooth element (136) and the second tooth element (130) are engageable in a rotatable and ratcheting manner.

6. The user input device (14) according to any of claims 3 to 5, wherein the first tooth unit (104) comprises a third tooth element (138) and a fourth tooth element (140) that are arranged on the movable part (36),
wherein the second tooth unit (106) comprises a seventh tooth element (142) that engages with the third tooth element (138) in case of a radial displacement of the movable part (36) in a third orientation (56) along the second radial displacement direction (50),
wherein the second tooth unit (106) comprises an eighth tooth element (144), that engages the fourth tooth element (140) in case of a radial displacement of the movable part (36) in a fourth orientation (58) along the second radial displacement direction (50), and
wherein the third orientation (56) is opposite to the fourth orientation (58).

7. The user input device (14) according to claim 6, wherein the seventh tooth element (142) and the third tooth element (138) are engageable in a non-rotatable manner, and/or
wherein the eighth tooth element (144) and the fourth tooth element (140) are engageable in a non-rotatable manner.

8. The user input device (14) according to claim 7, wherein the seventh tooth element (142) and/or the eighth tooth element (144) are displaceable against a resilient element along a fifth direction (146) that is parallel to a circumferential direction of the movable part (36).

9. The user input device (14) according to claim 7 or 8, wherein the seventh tooth element (142) and/or the eighth tooth element (144) are displaceable against a ratcheting member (150) along the fifth direction (146) that is parallel to the circumferential direction of the movable part (36).

10. The user input device (14) according to any one of the preceding claims, further comprising a centering means (116) centering the movable part (36) in a resting position (46) in the absence of a manipulation.

11. The user input device (14) according to claim 10, wherein the first tooth unit (104) further comprises an axial tooth element (118) and wherein the second tooth unit (106) further comprises a third guiding means (120) engaging the axial tooth element (118) for providing a haptic feedback in case of a rotation of the movable part (36) when in the resting position (46).

12. The user input device (14) according to claim 11, wherein the axial tooth element (118) and the third guiding means (120) engage in the resting position (46) and disengage in case of a radial displacement of the movable part (36).

13. The user input device (14) according to any one of the preceding claims, further comprising a sensing unit (82) for sensing one or more of a radial displacement, an axial displacement and a rotation of the movable part (36).

14. A vehicle (10) comprising the user input device (14) according to any of the preceding claims.

15. The vehicle (10) of claim 14, wherein the user input device (14) is configured to adjust one or more of:
- a user entertainment system of the vehicle (10),
- a heating, ventilation and air conditioning system of the vehicle (10),
- a driving function of the vehicle (10),
- a light of the vehicle (10),
- a driver assistance function of the vehicle (10), and
- a user profile setting.
